Europäisches Patentamt

(19) European Patent Office

Office européen des brevets

(11) Numéro de publication: **0 233 811**

**B1**

(12) **FASCICULE DE BREVET EUROPEEN**

(45) Date de publication du fascicule du brevet: 23.05.90

(51) Int. Cl.⁵: **B 60 H 1/22, F 24 J 3/00**

(21) Numéro de dépôt: **87400156.3**

(22) Date de dépôt: **23.01.87**

(54) **Générateur de chaleur à friction, notamment pour véhicule automobile.**

(30) Priorité: **03.02.86 FR 8601456**

(43) Date de publication de la demande:
**26.08.87 Bulletin 87/35**

(45) Mention de la délivrance du brevet:
**23.05.90 Bulletin 90/21**

(84) Etats contractants désignés:
**DE FR GB SE**

(56) Documents cités:
**FR-A- 458 259**
**FR-A-2 522 765**
**FR-A-2 530 321**
**GB-A- 452 990**
**US-A-4 295 461**

(73) Titulaire: **VALEO**
**64 Avenue de la Grande Armée**
**F-75017 Paris (FR)**

(72) Inventeur: **Herbulot, Jean**
**80, rue du Docteur Roux**
**F-95130 Franconville (FR)**
Inventeur: **Vandershuren, Alain**
**107 Avenue Gabriel Péri**
**F-93400 Saint-Ouen (FR)**
Inventeur: **Risbet, Alain**
**38, rue Jean-Jaurès**
**F-95130 Franconville (FR)**

(74) Mandataire: **CABINET BONNET-THIRION**
**95 Boulevard Beaumarchais**
**F-75003 Paris (FR)**

Courier Press, Leamington Spa, England.

**Description**

L'invention se rapporte à un générateur de chaleur à friction, entraîné par un moteur, plus particulièrement adapté pour fournir un chauffage d'appoint à l'habitacle d'un véhicule équipé d'un tel générateur et/ou pour atteindre et entretenir une température de fonctionnement suffisante du moteur de ce véhicule, même au ralenti.

On connaît des installations de chauffage d'appoint pour véhicule automobile dans lesquelles la chaleur est engendrée en entretenant une circulation de fluide et en créant une perte de charge dans cette circulation de fluide. De nombreux systèmes proposés comportent une restriction et une pompe forçant un liquide à traverser cette restriction. D'autres systèmes connus utilisent des éléments à aubages dont l'un est bloqué en rotation et entre lesquels un liquide est admis à circuler, en s'échauffant par suite des frottements entretenus entre les éléments à aubages.

L'invention se rapporte à un autre concept de production de chaleur, utilisant des éléments à friction plongés dans un fluide caloporteur.

Le document FR-A- 2 530 321 décrit un générateur de chaleur comportant une enceinte renfermant des moyens à friction mécanique à serrage variable entraînés par un arbre rotatif, comportant des moyens de modulation du serrage desdits moyens à friction mécanique tendant à augmenter progressivement le serrage en fonction de la vitesse dudit arbre dans une plage inférieure de vitesses.

L'invention vise plus particulièrement un perfectionnement permettant d'adapter à volonté la puissance calorifique produite en fonction de la vitesse du moteur entraînant certains éléments à friction, c'est-à-dire le plus souvent le moteur du véhicule automobile, lui-même.

Dans cet esprit, l'invention concerne un générateur de chaleur du type indiqué ci-dessus et conforme à la partie caractérisante de l'une quelconque des revendications 1, 5, 12 et 15.

Le couplage thermique du fluide caloporteur peut être direct, en le faisant traverser l'enceinte précitée, ou indirect, grâce à un boîtier à double paroi.

Comme on verra plus loin, cette modulation du serrage des moyens à friction mécanique peut être obtenue soit par action centrifuge mécanique en utilisant des masselottes ou des billes agissant sur les moyens de serrage, soit encore par action hydraulique, en exploitant la pression centrifuge du fluide caloporteur dans l'enceinte et/ou la pression qui règne dans cette dernière, qui augmente avec la vitesse de rotation d'une pompe entraînée par le moteur précité. Bien entendu, les actions centrifuges mécaniques et hydrauliques peuvent être combinées.

L'invention sera mieux comprise et d'autres avantages de celle-ci apparaîtront plus clairement à la lumière de la description qui va suivre, de plusieurs modes de réalisation d'un générateur de chaleur conforme à son principe, donnée uniquement à titre d'exemple et faite en référence aux dessins annexés dans lesquels:

la figure 1 représente schématiquement le générateur de chaleur en coupe longitudinale au repos;

la figure 2 est une vue schématique de détails illustrant une variante des moyens de modulation du serrage;

la figure 3 est une vue analogue à la figure 2 illustrant une autre variante;

la figure 4 est une vue analogue à la figure 1, illustrant une autre variante; et

la figure 5 est une vue analogue à la figure 1, illustrant encore une autre variante.

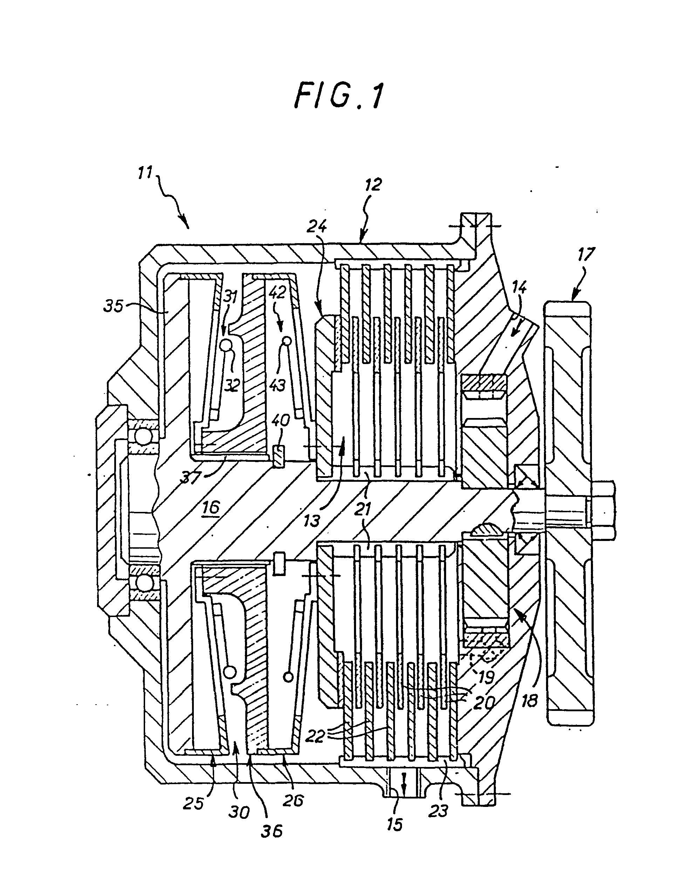

En se reportant à la figure 1, on a représenté un générateur de chaleur 11 comportant un boîtier 12 dans lequel est ménagé une enceinte 13 à l'intérieur de laquelle un fluide caloporteur (huile ou eau glycolée) est admis à circuler entre une entrée 14 et une sortie 15. Un arbre 16 est monté en rotation dans le boîtier 12. Cet arbre est entraîné par une roue dentée 17, ou en variante par une poulie, couplée à un moteur (non représenté), le plus souvent le moteur du véhicule automobile dans lequel le générateur de chaleur est installé. Une pompe par exemple à engrenages 18 à débit variable est logée à l'intérieur du boîtier 12 et entraînée par l'arbre 16 lui-même. L'entrée 14 de fluide caloporteur communique avec la pompe 18 et cette dernière refoule le fluide caloporteur dans l'enceinte 13, par un élément de conduit 19. L'enceinte 13 abrite des moyens à friction mécanique à serrage variable. Plus précisément, ces moyens sont ici constitués par des premiers disques de friction 20 solidaires en rotation de l'arbre 16 et mobiles suivant la direction axiale de celui-ci, grâce à des cannelures longitudinales 21 pratiquées à la surface dudit arbre et par des seconds disques de friction 22 disposés en alternance avec lesdits premiers disques de friction et mobiles dans l'enceinte 13 suivant la même direction axiale tout en étant bloquée contre toute rotation. Pour ce faire, des cannelures longitudinales 23 sont ménagées à la surface interne de l'enceinte 13 et les disques 22 coulissent le long de ces cannelures. Par ailleurs, un plateau de serrage 24 est monté coulissant axialement le long de l'arbre 13 en étant engagé sur les cannelures longitudinales 21, pour être entraîné en rotation par l'arbre 16. Selon l'exemple, ce plateau de serrage porte aussi l'un des disques de friction 20. Les moyens à friction mécanique sont associés à des moyens de commande de serrage 30 comportant notamment un premier diaphragme élastique 25 à action axiale et un second diaphragme élastique 26 à action axiale agissant pour appliquer le plateau de serrage 24 contre les disques 20 et 22 de façon à les serrer les uns contre les autres. Ces moyens de commande de serrage 30 sont agencés pour moduler le serrage des disques lorsque la vitesse du moteur entraînant l'arbre 16 varie.

Selon l'exemple représenté, le diaphragme 25 est lié à sa périphérie externe à un disque 35 solidaire de l'arbre 16 et à un plateau intermédiaire 36 solidaire en rotation de l'arbre 16 et monté coulissant longitudinalement par rapport à lui, grâce à un système de cannelures et rainures 37. Le second diaphragme 26 est lié par son bord externe au plateau intermédiaire 36 et, par une zone annulaire médiane, au plateau de serrage 24. Ainsi, tout déplacement de la zone annulaire centrale du diaphragme 25 se répercute sur le serrage des disques de friction 20 et 22 par l'intermédiaire du plateau intermédiaire 36 et du second diaphragme 26. En pratique, le diaphragme 25 est incliné en sens inverse du diaphragme 26, et la précontrainte desdits diaphragmes 25, 26 est déterminée en sorte qu'aux faibles vitesses de rotation de l'arbre existe un jeu entre le plateau intermédiaire 36 et une butée 40 solidaire de l'arbre 16, les moyens à friction mécanique étant alors sensiblement desserrés. Selon une particularité importante de l'invention, les moyens de modulation du serrage des disques 20, 22 comprennent plus particulièrement un premier agencement centrifuge incluant des moyens élastiques ici le premier diaphragme 25 et conçu pour agir dans un sens tendant à augmenter progressivement le serrage en fonction de la vitesse de l'arbre 16, dans une plage inférieure prédéterminée de vitesses de celui-ci. Selon l'exemple, ce premier agencement centrifuge comporte un premier groupe de masselottes 32 entraîné en rotation par l'arbre 16 et coopérant avec le premier diaphragme 25 pour le déformer par basculement en fonction des forces centrifuges dans un sens tendant à le rapprocher du plateau de serrage 24 (en entraînant dans ce mouvement le plateau intermédiaire 36 et le second diaphragme 26) pour provoquer et augmenter progressivement le serrage des premiers et seconds disques de friction 20 et 22. Selon l'exemple, les masselottes du groupe 32 sont fixées aux extrémités de tiges flexibles elles-mêmes fixées au premier diaphragme 25. L'inclinaison du diaphragme et donc de ces tiges par rapport à l'arbre 16 est telle que leur redressement progressif sous l'effet des forces centrifuges entraîne la déformaion du diaphragme et le déplacement de la partie centrale de celui-ci vers la droite en considérant la figure 1. La butée 40 interposée entre le plateau intermédiaire 36 et le plateau de serrage 24, limite le déplacement du plateau intermédiaire 36 sous l'action du diaphragme 25 de sorte que, au-delà d'une certaine vitesse de rotation, l'effet du premier agencement centrifuge 31 sur le serrage des disques de friction 20 et 22, se trouve limité à une valeur maximum correspondant à une certaine contrainte du diaphragme 26 sous l'effet du déplacement du plateau intermédiaire 36.

Selon une autre particularité avantageuse de l'invention, les moyens de modulation comportent en outre un second agencement centrifuge 42 incluant plus spécifiquement le second diaphragme 26 des moyens de commande de serrage, selon un montage tendant à diminuer progressivement ledit serrage en fonction de l'augmentation de la vitesse de l'arbre 16. Pour ce faire, un second groupe de masselottes 43 est entraîné en rotation par l'arbre 16 et coopère avec le second diaphragme 26 pour le déformer par basculement en fonction des forces centrifuges dans un sens tendant à l'éloigner du plateau de serrage 24, pour réduire progressivement l'effort de serrage des premiers et seconds disques de friction 20 et 22. Comme pour les masselottes du premier groupe, les masselottes du second groupe sont ici montées aux extrémités de tiges flexibles elles-mêmes fixées au diaphragme 26 et l'inclinaison du diaphragme 26 et de ces tiges par rapport à l'axe 16 est telle que leur redressement sous l'effet de la force centrifuge se traduise par une déformation progressive du diaphragme 26 entraînant son déplacement vers la gauche en considérant la figure 1.

Le fonctionnement du générateur de chaleur qui vient d'être décrit est des plus simples et découle avec évidence de la description qui précède. Au démarrage du moteur d'entraînement du générateur de chaleur, les disques 20 et 22 sont desserrés de sorte que le générateur de chaleur n'exerce, abstraction faite d'un éventuel couple de trainée résiduel, aucun couple résistant au démarrage du moteur. Dès que l'arbre 16 est entraîné en rotation, l'action du diaphragme 2 et du groupe de masselottes 32 est prépondérant sur l'action du diaphragme 26 et du groupe de masselottes 43, (par exemple du fait que les masselottes du premier groupe sont plus lourdes que les masselottes du second groupe) de sorte que le diaphragme 25 commence à se déformer et à entraîner successivement le plateau intermédiaire 36 et le second diaphragme 26 pour provoquer le serrage progressif des disques de friction 20 et 22. La puissance calorifique du générateur de chaleur augmente donc progressivement jusqu'à une certaine valeur correspondant à une vitesse de rotation choisie de l'arbre 16. Lorsque cette vitesse est atteinte, le plateau intermédiaire 36 se bloque conre la butée 40 et la puissance calorifique se stabilise alors à une valeur choisie. Pour toute augmentation ultérieure de la vitesse de l'arbre 16, le second groupe de masselottes 43 peut alors agir en système de régulation tendant à desserrer les disques 20 et 22 de façon à maintenir la puissance calorifique à une valeur sensiblement constante.

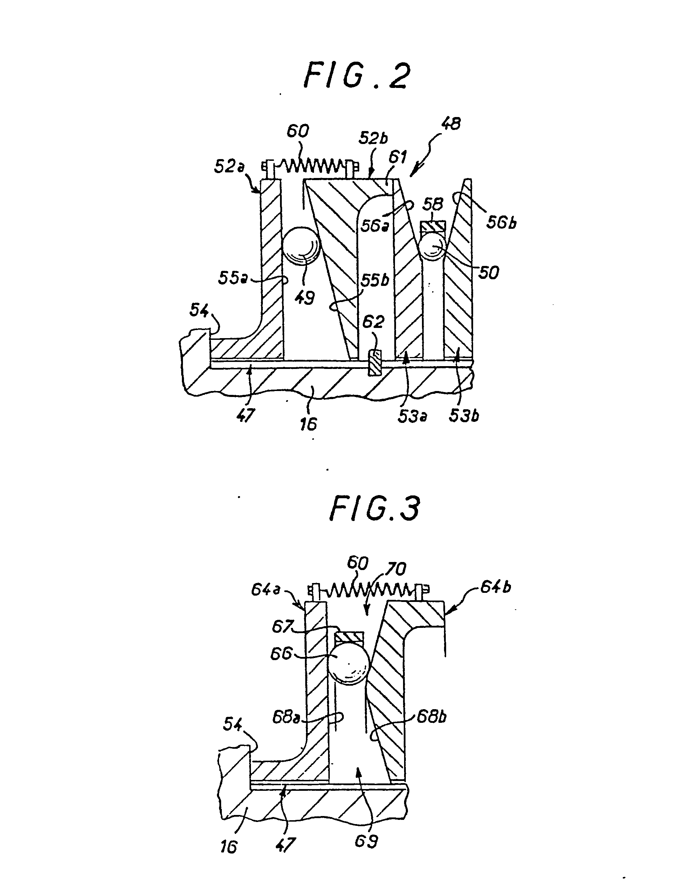

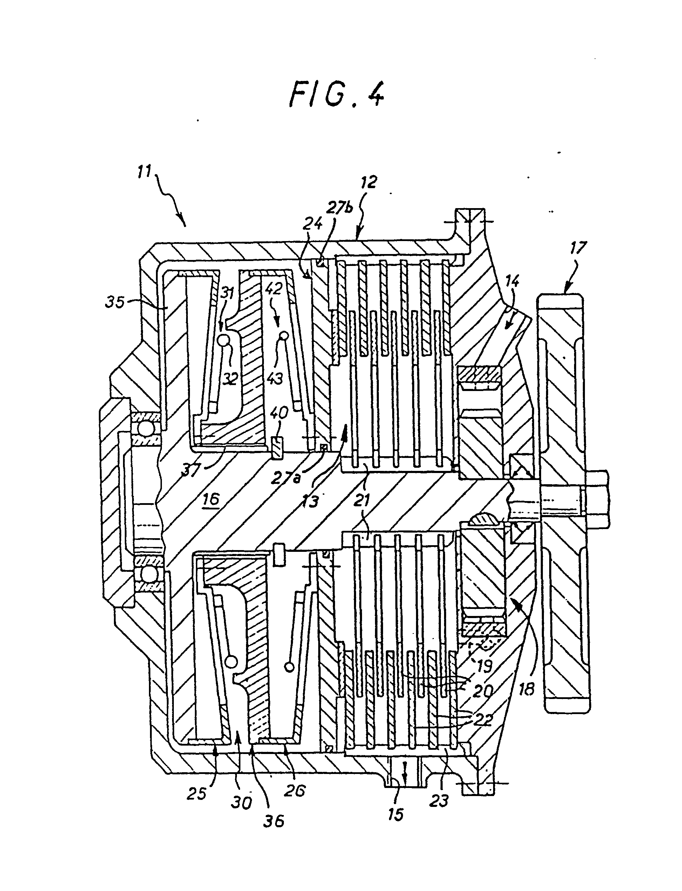

A partir du mode de réalisation de la figure 1, on peut en outre envisager la variante de la figure 4 dans laqelle les moyens de modulation précités incluent un montage particulier du plateau de serrage 24 pour exploiter la variation de pression du fluide caloporteur dans l'enceinte 13 en fonction de la vitesse de l'arbre 16. Il suffit en effet, de modifier la forme et le montage du plateau 24 pour le rendre coulissant de façon étanche sur l'arbre 16 d'une part, et le long de la paroi interne du boîtier 12 d'autre part, au moyen de garnitures d'étanchéité 27a, 27b respectivement pour transformer ce plateau en paroi mobile de l'enceinte 13, sensible aux variations de pression du fluide caloporteur qui traverse ladite enceinte. Comme ce fluide caloporteur est introduit dans l'enceinte 13 par une pompe à engrenages 18 entraînée par l'arbre 16, le débit de cette pompe dépend donc de la vitesse de l'arbre et la pression à la périphérie de l'enceinte 13 augmente avec la vitesse de l'arbre 16. Avec ce montage particulier du plateau 24, une augmentation de pression dans l'enceinte 13 sollicite le plateau dans un sens tendant à desserrer les disques de friction 20 et 22 et donc à limiter la puissance calorifique produite. On peut donc combiner l'effet de ce montage particulier du plateau 24 à celui du second agencement centrifuge décrit ci-dessus et éventuellement supprimer ce dernier. Le montage particulier du plateau 24 peut aussi être adapté aux variantes qui vont être décrites maintenant en référence aux figures 2 et 3.

Selon ces variantes, les moyens de modulation comportent au moins deux plateaux d'écartement variable, montés mobiles axialement sur l'arbre 16 et solidaires en rotation de ce dernier grâce à un système de cannelures et rainures 47 définies sur ledit arbre 16 et lesdits plateaux. De façon générale, les masselottes consistent en des billes pesantes 49 (en acier) et sont confinées entre les plateaux et assujetties à se positionner entre eux à une certaine distance radiale de l'arbre 16, en fonction de la force centrifuge qui leur est communiquée, tandis qu'au moins l'un des plateaux a sa face en contact avec lesdites billes conformée pour définir un écartement variable (considéré par exemple au voisinage immédiat de l'arbre 16) des plateaux, en fonction de la vitesse de l'arbre 16 et sous l'effet du positionnement correspondant des billes. Du fait que ces plateaux sont placés sur l'arbre 16 de façon à communiquer leurs variations de position au plateau de serrage 24, l'écartement variable de ces plateaux définit donc une loi de modulation prédéterminée du serrage desdits moyens à friction mécanique, cette loi dépendant du profil des faces en regard desdits plateaux. En pratique, l'un des plateaux d'écartement variable (ici le plateau le plus à droite en considèrant les figures 2 et 3) peut être le plateau de serrage lui-même.

Selon le mode de réalisation spécifique de la figure 2, les moyens de modulation 48 comportent deux paires de tels plateaux d'écartement variable, 52a, 52b d'une part et 53a, 53b d'autre part, se succédant (de gauche à droite en considèrant les dessins) le long de l'arbre 16. Ainsi, comme mentionné ci-dessus, le plateau 53b peut être le plateau de serrage précité, jouant le rôle du plateau 24 de la figure 1. Le plateau 52a peut venir en butée contre un épaulement 54 de l'arbre 16. Il peut aussi être immobilisé par rapport à l'arbre. Un premier groupe de billes 49 est confiné entre les plateaux 52a, 52b de la première paire précitée tandis qu'un second groupe de masselottes sous forme, de billes 50 (ici de masse plus faible) est confiné entre les plateaux 53a, 53b de la seconde paire précitée. Les surfaces en regard 55a, 55b des plateaux 52a, 52b définissent un espace se rétrécissant radialement vers l'extérieur pour toute position relative desdits plateaux. Plus précisément, dans l'exemple représenté, la face 55a du plateau 52a est perpendiculaire à l'arbre 16 tandis que le profil d'une coupe radiale de la face 55b du plateau 52b et une droite inclinée vers le plateau 52a en s'éloignant de l'arbre 16. Les surfaces en regard 56a, 56b des plateaux 53a, 53b définissent un espace s'élargissant radialement vers l'extérieur au moins à partir d'une certaine ditance radiale de l'arbre 16, pour toute position relative desdits plateaux. Plus précisément, le profil d'une coupe radiale de chaque face 56a, 56b comporte en s'éloignant de l'arbre 16, une portion de droite perpendiculaire à cet arbre prolongée par une autre portion de droite s'éloignant de l'autre plateau.

Les billes du second groupe de billes 50 sont maintenues dans leur espace de confinement défini entre les plateaux 53a, 53b par des moyens élastiques sous forme d'un anneau élastique 58 à action radiale. D'autre part, les plateaux 52a, 52b de ladite première paire sont sollicités axialement l'un vers l'autre par des moyens élastiques tels que des ressorts à boudin 60 à action axiale montés en traction entre lesdits plateaux. Enfin, le plateau 52b de la première paire le plus proche du plateau 56a de la seconde paire comporte une collerette d'engagement 61 lui permettant d'entrer en contact avec le plateau 56a pour repousser l'ensemble de ladite seconde paire de plateaux dans un sens tendant à resserrer les moyens à friction mécanique. La course du plateau 52b est limitée axialement par une butée 62 solidaire de l'arbre 16.

Le fonctionnement de ce second mode de réalisation est comparable à celui de la figure 1. Comme précédemment, l'action du premier groupe de masselottes 49 et des moyens élastiques 60 est prépondérante par rapport à l'action du second groupe de masselottes 50 et des moyens élastiques 58. En effet, lorsque l'arbre 16 ne tourne pas, les disques de friction sont, comme précédemment, desserrés et dès que l'arbre 16 commence à être entraîné en rotation, les billes 49 commencent à s'éloigner de l'arbre 16 sous l'effet de la force cenrifuge et provoquent l'écartement des plateaux 52a, 52b qui repoussent progressivement les plateaux de la seconde paire pour entraîner un serrage progressif des disques de friction 20, 22 jusqu'à ce que, pour une vitesse prédéterminée, le plateau 52b soit immobilisé par la butée 62. Si la vitesse d'entraînement de l'arbre 16 augmente encore, le serrage des disques de friction est alors limité à une valeur maximum jusqu'à ce qu'un desserrement progressif de ces disques, stabilisant la puissance calorifique, soit commandé par le déplacement radial du second groupe de billes 50 entraînant le rapprochement des plateaux 53a, 53b.

Le mode de réalisation de la figure 3 ne comporte que deux plateaux d'écartement variable 64a, 64b montés coulissants par rapport à l'arbre 16 et entraînés en rotation par cet arbre au moyen d'un système de cannelures et rainures 47 semblable à celui de la figure 2, le plateau 64a est également semblable au plateau 52a de la figure 2 et prend appui également contre un épaulement 54 de l'arbre 16. Les deux plateaux sont en outre sollicités axialement l'un vers l'autre par des moyens élastiques semblables à ceux de la figure 2, c'est-à-dire des ressorts de traction 60. Un groupe de billes 66 est confiné entre les deux plateaux 64a, 64b et maintenu entre ces plateaux par des moyens élastiques semblables également à ceux de la figure 2, c'est-à-dire un anneau élastique 67. Selon cette variante, les plateaux et plus particulièrement ici le plateau 64b, ont leurs faces en regard 68a, 68b conformées pour définir, successivement dans le sens radial, un premier espace 69 se rétrécissant radialement vers l'extérieur puis un second espace 70 s'élargissant radialement vers l'extérieur. Ceci est obtenu par le profil particulier, en coupe radiale, de la face 68b du plateau 64b qui comporte deux portions de droite inclinées par rapport à l'arbre 16 de façon à, successivement en s'éloignant de cet arbre, se rapprocher puis s'éloigner du plateau 64a. Le plateau 64b peut jouer le rôle de plateau de serrage. Le fonctionnement de ce mode de réalisation est très comparable au précédent. Pour ce faire, les billes 66 formant le premier et le second groupe de masselottes, l'action des moyens élastiques 60 est choisie prépondérante par rapport à celle des moyens élastiques 67. Tant que les billes 66 se trouvent dans le premier espace 69, c'est-à-dire pour une plage inférieure de vitesses de l'arbre 16, les plateaux 64a et 64b ont tendance à s'écarter sous l'effet de la force centrifuge appliquée aux billes 66. Les disques de friction sont donc progressivement serrés. Si la vitesse augmente encore, les billes 66 pénètrent dans le second espace 70 et les plateaux 64a, 64b se rapprochent progressivement en desserrant les disques de friction pour stabiliser la puissance calorifique produite.

Les modes de réalisation des figures 2 et 3 permettent, en choisissant à volonté le profil des faces en regard des différentes paires de plateaux, d'obtenir n'importe quelle fonction de modulation du serrage des disques de friction en fonction de la vitesse de rotation de l'arbre 16.

On pourra adjoindre à chaque variante du dispositif qui vient d'être décrit un embrayage électromagnétique intercalé entre l'arbre 16 et son moteur d'entraînement, c'est-à-dire la plupart du temps, le moteur du véhicule. Cet embrayage électromagnétique pourra ainsi être piloté par des moyens de commande thermostatique (non représentés) thermiquement couplés, directement ou indirectement, au fluide caloporteur circulant dans l'enceinte 13 ou à l'élément à chauffer. La valeur de consigne des moyens de commande thermostatique pourra être ajustée depuis l'habitacle du véhicule.

Avantageusement, dans le cas où le moteur d'entraînement de l'arbre 16 est le moteur du véhicule, on pourra aussi intercaler entre ce moteur et l'arbre 16 un variateur de vitesses à limitation de plage de vitesses, comme par exemple un variateur de vitesses centrifuge à poulies et courroie connu en soi, et décrit par exemple dans le brevet français No. 2522765. L'interposition de ce variateur de vitesses permettra d'obtenir une production de chaleur suffisante même aux plus basses vitesses de rotation du moteur.

Il ressort également à l'évidence de la description que l'action prépondérante du premier groupe de masselottes et de moyens élastiqes sur un second groupe de masselottes et de moyens élastiques peut être obtenu en jouant sur la force de serrage des moyens élastiques et/ou des masselottes ce qui permet d'obtenir une bonne précision sur la puissance calorifique du générateur. Par exemple, à la figure 1, on, peut augmenter la masse des masselottes 43 en diminuant la charge du diaphragme 25 et/ou augmenter la charge du diaphragme 25 et diminuer la masse des masselottes 32. Ainsi, les masselottes 32 pourraient avoir une masse inférieure à celle des masselottes 43.

Bien entendu, la présente invention n'est pas limitée aux exemples de réalisation représentés, par exemple au diaphragme 25 et au premier groupe de masselottes pourraient être associés les billes 50 et l'anneau élastique 58 de la figure 2. Autrement dit, les solutions explicitées en référence à la figure 1 d'une part, et en référence aux figures 2 et 3 d'autre part, sont combinables.

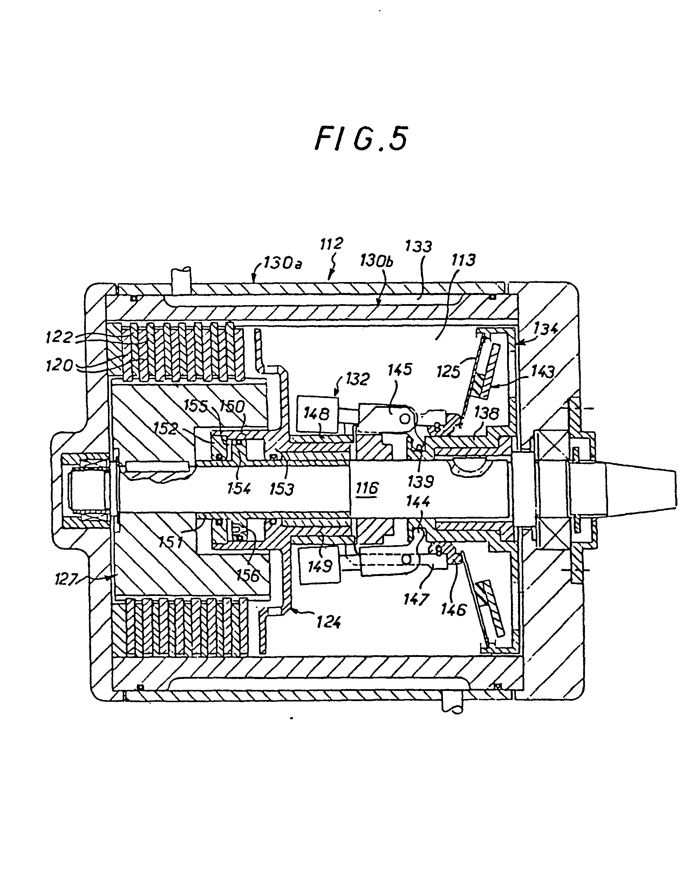

En se reportant à la figure 5 où les éléments de structure analogues à ceux de la figure 1 portent les mêmes références numériques augmentées de 100, on a représenté un autre mode de réalisation dans lequel on n'utilise qu'un seul élément élastique ou diaphragme 125 sur lequel agissent les premier et second groupes de masselottes 132, 143, respectivement.

Le boîtier 112 comporte, dans sa partie cylindrique, deux portions tubulaires 130a et 130b formant une double paroi qui délimite un espace annulaire 133 pour la circulation d'un fluide caloporteur, en l'occurrence ici l'eau du circuit de chauffage. L'enceinte 113 est, quant à elle, close et remplie d'huile. Bien entendu, ce mode de couplage thermique pour l'évacuation des calories produites, peut facilement être adapté aux modes de réalisation des figures 1 à 4.

Selon la variante en question, un ressort en forme de diaphragme annulaire 125 a sa périphérie externe en contact avec un plateau 134 perpendiculaire à l'arbre 116 et solidaire d'un manchon 138 coulissant sur cet arbre tout en étant lié en rotation à celui-ci grâce à un système de rainure et clavette classiques. Ce manchon comporte une gorge 139 dans laquelle sont engagées les extrémités de leviers 144 faisant saillie des masselottes 132 du premier groupe. Ces masselottes, ici au nombre de trois, sont montées pivotantes sur un support 145 fixé à l'arbre 116. Autrement dit, les masselottes du premier groupe sont liées en rotation à l'arbre 116 et couplées par des liaisons de forme (139, 144) au diaphragme, pour le déformer en fonction des forces centrifuges qui s'exercent sur elles, dans un sens tendant à le rapprocher du plateau de serrage, c'est-à-dire dans un sens propre à resserrer l'empilage des disques 120 et 122. Les disques 120 sont liés en rotation à l'arbre 116 par l'intermédiaire d'un moyeu 127 fixé à ce dernier. Le diaphragme 125 est par ailleurs en appui, par sa périphérie interne, contre une couronne 146 montée coulissante à la surface externe du manchon 138 et rattachée à des supports longitudinaux 147, s'étendant parallèlement à l'arbre 116, autour de celui-ci et passant entre les masselottes 132. Ces supports allongés 147 sont rattachés à une portion tubulaire cylindrique 148 engagée sur un manchon de coulissement 149 prolongeant le plateau de serrage 124. Cette portion 148 est en butée axiale contre ledit plateau. Un système d'amortissement est agencé entre une partie 150 en forme de manchon, prolongeant axialement le plateau 124 et une partie 151 solidaire de l'arbre 116. Ces deux parties cylindriques coaxiales, complétées par des parois 152, 153 et 154 perpendiculaires à l'arbre 116, définissent une cavité annulaire 155 remplie de liquide. La paroi 154, appartenant à la partie 151, partage la cavité en deux chambres et cette paroi est percée de canaux 156 de faible section. Cet agencement forme un amortisseur hydraulique, couplé au plateau 124.

Par ailleurs, les masselottes du second groupe 143 sont, comme dans le cas de la figure 1, entraînées en rotation par l'arbre 116 et coopèrent avec le diaphragme 125 pour le déformer en fonction des forces centrifuges, dans un sens tendant à l'éloigner du plateau de serrage 124, pour réduire progressivement l'effort de serrage entre lesdits premier et second disques de friction. Ces masselottes 143 plus petites, sont portées par le diaphragme 125 lui-même. Le fonctionnement est le suivant.

Sous l'effort de la force centrifuge, les masselottes 132 du premier groupe se redressent, ce qui a pour conséquence de déplacer le manchon 138 et le plateau 134 en direction des disques de friction. On provoque ainsi successivement le serrage des disques 120, 122 entre eux et le chargement progressif du diaphragme 134. Dans l'exemple, les éléments sont calculés et dimensionnés pour obtenir une charge maximum du diaphragme à environ mille tours par minute. Pour des vitesses supérieures, l'effet contraire engendré par les masselottes 143 devient de plus en plus sensible et l'effort de serrage diminue progressivement avec la vitesse, jusqu'à s'annuler au voisinage de 3200 tours par minute.

L'invention peut s'appliquer au chauffage de tout autre véhicule à moteur, par exemple un bateau.

**Revendications**

1. Générateur de chaleur, notamment pour véhicule automobile à moteur comportant une enceinte (13) renfermant des moyens à friction mécanique (20, 22) à serrage variable entraînée en rotation par un arbre (16) couplé à un moteur, comportant des moyens (25, 26, 30, 31, 42) de modulation du serrage desdits moyens à friction mécanique tendant à augmenter progressivement ledit serrage en fonction de la vitesse dudit arbre (16) dans une plage inférieure prédéterminée de vitesses, caractérisé en ce qu'il comporte des premiers disques de friction (20) solidaires en rotation dudit arbre (16), montés dans ladite enceinte et mobiles suivant la direction axiale de cet arbre, des seconds disques de friction (22) disposés en alternance avec lesdits premiers disques, mobiles dans ladite enceinte suivant ladite direction axiale et bloqués contre toute rotation et un plateau de serrage (24) monté coulissant axialement pour resserrer les premiers et seconds disques de friction et sur lequel s'appliquent lesdits moyens de modulation, en ce que lesdits moyens de modulation comportent un premier diaphragme (25) et un premier groupe de masselottes (32) entraînées en rotation par ledit arbre et coopérant avec ledit premier diaphragme (25) pour le déformer en fonction des forces centrifuges dans un sens tendant à le rapprocher dudit plateau de serrage pour provoquer et augmenter progressivement le serrage desdits premiers et seconds disques de friction et en ce que les moyens de modulation de serrage sont agencés pour diminuer progressivement ledit serrage dans une autre plage de vitesses, en fonction de l'augmentation de la vitesse dudit arbre.

2. Générateur de chaleur selon la revendication 1, caractérisé en ce que lesdits moyens de modulation comportent un second diaphragme (26) et un second groupe de masselottes (43) entraînées en rotation par ledit arbre et coopérant avec ledit second diaphragme pour le déformer en fonction des forces centrifuges dans un sens tendant à l'éloigner dudit plateau de serrage, pour réduire progressivement le serrage desdits premiers et seconds disques de friction.

3. Générateur de chaleur selon la revendication 2, caractérisé en ce que ledit second diaphragme (26) coopère avec ledit plateau de serrage, en ce qu'il est solidaire d'un plateau intermédiaire (36) monté mobile axialement sur ledit arbre, en ce que ledit premier diaphragme (25) coopère avec ledit plateau intermédiaire et en ce qu'une butée (40) est solidaire dudit arbre pour limiter le déplacement dudit plateau intermédiaire en direction dudit plateau de serrage.

4. Générateur de chaleur selon la revendication 3, caractérisé en ce que lesdits diaphragmes sont entraînés en rotation par ledit arbre, en ce que les masselottes du premier groupe précité sont montées sur ledit premier diaphragme (25) et que les masselottes du second groupe précité sont montées sur ledit second diaphragme (26).

5. Générateur de chaleur, notamment pour véhicule automobile à moteur comportant une enceinte (13) renfermant des moyens à friction mécanique (20, 22) à serrage variable entraînée en rotation par un arbre (16) couplé à un moteur, comportant des moyens de modulation (48) du serrage desdits moyens à friction mécanique tendant à augmenter progressivement ledit serrage en fonction de la vitesse dudit arbre (16) dans une plage inférieure prédéterminée de vitesses, caractérisé en ce qu'il comporte des premiers disques de friction (20) solidaires en rotation dudit arbre (16), montés dans ladite enceinte et mobiles suivant la direction axiale de cet arbre, des seconds disques de friction (22) disposés en alternance avec lesdits premiers disques, mobiles dans ladite enceinte suivant ladite direction axiale et bloqués contre toute rotation et un plateau de serrage (24) monté coulissant axialement pour resserrer les premiers et seconds disques de friction et sur lequel s'appliquent lesdits moyens de modulation, en ce que lesdits moyens de modulation comportent au moins deux, plateaux d'écartement variable (52a, 52b- 53a, 53b- 64a, 64b) montés mobiles axialement sur ledit arbre et solidaires en rotation de ce dernier, en ce que des masselottes ou billes (49, 50, 70) sont assujetties à se positionner entre ces deux plateaux en fonction de la force centrifuge que leur communique ledit arbre et en ce qu'au moins l'un des plateaux a sa face en contact avec lesdites masselottes ou billes conformée pour définir un écartement variable des deux plateaux, définissant au moins en partie une loi de modulation du serrage desdits moyens à friction mécanique, ladite loi étant définie pour diminuer progressivement ledit serrage dans une autre plage de vitesses, en fonction de l'augmentation de la vitesse dudit arbre.

6. Générateur de chaleur selon la revendication 5, caractérisé en ce que l'un des plateaux d'écartement variable (53b, 64b) est le plateau de serrage précité.

7. Générateur de chaleur selon la revendication 5 ou 6, caractérisé en ce qu'il comporte deux paires de plateaux d'écartement variable (52a, 52b- 53a, 53b) renfermant respectivement deux groupes de billes (49, 50), une première paire (52a, 52b) dans laquelle les surfaces en regard desdits plateaux définissent un espace se rétrécissant radialement vers l'extérieur et une seconde paire (56a, 56b) dans laquelle les surfaces en regard desdits plateaux définissent un espace s'élargissant radialement vers l'extérieur au moins à partir d'une certaine distance radiale de l'arbre.

8. Générateur de chaleur selon la revendication 7, caractérisé en ce que les masselottes ou billes dudit second groupe (50) sont maintenues dans leur espace entre lesdits plateaux par un anneau élastique (58) ou moyen analogue.

9. Générateur de chaleur selon l'une des revendications 7 ou 8, caractérisé en ce que le plateau (52b) de la première paire le plus proche d'un plateau (53a) de la seconde paire est conformé pour entrer en contact avec lui, pour repousser ladite seconde paire dans un sens tendant à resserrer les moyens à friction mécanique et que la course de ce plateau (52b) de ladite première paire est limitée axialement par une butée (62) solidaire dudit arbre.

10. Générateur de chaleur selon la revendication 5 ou 6, caractérisé en ce que les deux plateaux d'écartement variable (64a, 64b) ont leurs faces en regard conformées pour définir, radialement vers l'extérieur, un premier espace (69) se rétrécissant radialement vers l'extérieur, puis un second espace (70) s'élargissant radialement vers l'extérieur et en ce que les billes (66) situées entre ces faces en regard sont maintenues dans ledit premier ou second espace par un anneau élastique (67) ou moyen analogue.

11. Générateur de chaleur selon l'une des revendications 7 à 10, caractérisé en ce que les plateaux de ladite première paire sont sollicités axialement l'un vers l'autre par des moyens élastiques (60).

12. Générateur de chaleur, notamment pour véhicule automobile à moteur comportant une enceinte (13) renfermant des moyens à friction mécanique (20, 22) à serrage variable entraînée en rotation par un arbre (16) couplé à un moteur, comportant des moyens (25, 26, 30, 31, 42) de modulation du serrage desdits moyens à friction mécanique tendant à augmenter progressivement ledit serrage en fonction de la vitesse dudit arbre (16) dans une plage inférieure prédéterminée de vitesses, caractérisé en ce qu'il comporte des premiers disques de friction (20) solidaires en rotation dudit arbre (16), montés dans ladite enceinte et mobiles suivant la direction axiale de cet arbre, des seconds disques de friction (22) disposés en alternance avec lesdits premiers disques, mobiles dans ladite enceinte suivant ladite direction axiale et bloqués contre toute rotation et un plateau de serrage (24) monté coulissant axialement pour resserrer les premiers et seconds disques de friction et sur lequel s'appliquent lesdits moyens de modulation, et en ce que lesdits moyens de modulation comprennent ledit plateau de serrage (24) lui-même monté pour former une paroi mobile étanche de l'enceinte (13) précitée dans laquelle circule le fluide caloporteur, de façon à être soumis à la pression centrifuge provenant du fluide caloporteur lui-même et à être sollicité dans un sens tendant à desserrer lesdits moyens à friction mécanique (20, 22) (figure 4).

13. Générateur de chaleur selon la revendication 12, caractérisé en ce que ledit fluide caloporteur est entraîné par une pompe à débit variable (18) mécaniquement couplée au moteur, de façon qu'une augmentation de vitesse de celui-ci engendre une augmentation de pression dans ladite enceinte, agissant sur ledit plateau de serrage formant paroi mobile étanche.

14. Générateur de chaleur selon la revendication 13, caractérisé en ce que ladite pompe (18) est une pompe à engrenages directement couplée audit arbre (16).

15. Générateur de chaleur, notamment pour véhicule automobile à moteur comportant une enceinte (113) renfermant des moyens à friction mécanique (120, 122) à serrage variable entraînée en rotation par un arbre (116) couplé à un moteur, comportant des moyens (125, 132, 143) de modulation du serrage desdits moyens à friction mécanique tendant à augmenter progressivement ledit serrage en fonction de la vitesse dudit arbre (116) dans une plage inférieure prédéterminée de vitesses, caractérisé en ce qu'il comporte des premiers disques de friction (120) solidaires en rotation dudit arbre (116), montés dans ladite enceinte et mobiles suivant la direction axiale de cet arbre, des seconds disques de friction (122) disposés en alternance avec lesdits premiers disques, mobiles dans ladite enceinte suivant ladite direction axiale et bloqués contre toute rotation et un plateau de serrage (124) monté coulissant axialement pour resserrer les premiers et seconds disques de friction et sur lequel s'appliquent lesdits moyens de modulation, caractérisé en ce que lesdits moyens de modulation comportent un ressort formant diaphragme (125) annulaire, un premier groupe de masselottes (132) liées en rotation audit arbre et couplées par des liaisons de forme (139, 144) audit diaphragme, pour le déformer en fonction des forces centrifuges dans un sens tendant à le rapprocher dudit plateau de serrage (124), lesdits moyens de modulation de serrage étant agencés pour diminuer progressivement ledit serrage dans une autre plage de vitesses, en fonction de l'augmentation de la vitesse dudit arbre.

16. Générateur de chaleur selon la revendication 15, caractérisé en ce que les masselottes dudit premier groupe sont montées pivotantes sur un support (145) fixé audit arbre, et en ce que chaque masselotte (132) comporte un levier (144) engagé dans une gorge annulaire (139) d'un manchon (138) coulissant longitudinalement sur ledit arbre (116), ledit manchon étant prolongé par un plateau porte-diaphragme (134), perpendiculaire audit arbre.

17. Générateur de chaleur selon la revendication 16, caractérisé en ce que ledit diaphragme (134) est en appui, par sa périphérie interne, contre une couronne (146) montée coulissante à la surface externe dudit manchon (138) et liée à des supports longitudinaux (147) solidaires dudit plateau de serrage (124).

18. Générateur de chaleur selon l'une des revendications 15 à 17, caractérisé en ce qu'il comporte un second groupe de masselottes (143) entraînées en rotation par ledit arbre et coopérant avec ledit diaphragme (125) pour le déformer en fonction des forces centrifuges dans un sens tendant à l'éloigner dudit plateau de serrage (124), pour réduire progressivement l'effort de serrage entre lesdits premiers et seconds disques de friction.

19. Générateur de chaleur selon la revendication 22, caractérisé en ce que les masselottes dudit second groupe sont portées par le diaphragme (125).

20. Générateur de chaleur selon l'une des revendications 15 à 19, caractérisé en ce qu'un système d'amortissement est agencé entre une partie (150) solidaire du plateau de serrage et une partie (151) solidaire de l'arbre précité (116), ces deux parties définissant une cavité annulaire (155), une paroi solidaire de l'une des parties étant percée de canaux (156) de faible section partageant la cavité en deux chambres.

21. Générateur de chaleur selon l'une des revendications précédentes, caractérisé en ce qu'il comporte des moyens pour faire circuler un fluide caloporteur dans ladite enceinte.

22. Générateur de chaleur selon l'une des revendications 1 à 20, caractérisé en ce que le boîtier délimitant ladite enceinte (113) comporte une double paroi (130a, 130b) ménageant un espace (133) pour la circulation d'un fluide caloporteur.

23. Générateur de chaleur selon l'une des revendications précédentes, caractérisé en ce que ledit arbre (16) est mécaniquement couplé au moteur par l'intermédiaire d'un embrayage, par exemple un embrayage électromagnétique piloté par des moyens de commande thermostatique thermiquement couplés audit fluide caloporteur.

24. Générateur de chaleur selon l'une des revendications précédentes, caractérisé en ce que ledit arbre (16) est entraîné par ledit moteur avec interposition d'un variateur de vitesse à limitation de plage de vitesses, comme par exemple un variateur de vitesse centrifuge à poulies et courroie, connu en soi.

25. Générateur de chaleur selon l'une des revendications précédentes, caractérisé en ce que le moteur qui entraîne ledit arbre (16) est le moteur d'un véhicule automobile sur lequel ledit générateur de chaleur est embarqué.

**Patentansprüche**

1. Wärmegenerator, insbesondere für ein Kraftfahrzeug, mit einem Raum (13) zur Aufnahme von mechanischen Reibmitteln (20, 22) zur verstellbaren Einspannung, durch eine mit einem Motor gekoppelte Welle (16) in Rotation versetzt, mit Mitteln (25, 26, 30, 31, 42) zur Verstellung der Klemmung der genannten mechanischen Reibmittel mit der Tendenz zur allmählichen Verstärkung dieser Klemmung entsprechend der Drehzahl der genannten Welle (16) in einem festgelegten unteren Drehzahlbereich, dadurch gekennzeichnet, daß er erste, drehbeweglich mit der genannten Welle (16) fest verbundene Reibscheiben (20) enthält, die im genannten Raum angebracht und entsprechend der axialen Richtung dieser Welle beweglich sind, zweite Reibscheiben (22), die abwechselnd mit den genannten ersten Scheiben angeordnet und in dem genannten Raum entlang der genannten axialen Richtung beweglich sowie gegen jede Drehbewegung blockiert sind, und eine Klemmplatte (24), die in Längsrichtung verschiebbar angebracht ist, um die erste und zweite Reibscheibe einzuspannen und woran die genannten Verstellmittel angreifen, daß die genannten Verstellmittel eine erste Membran (25) und eine erste Gruppe von Einsätzen (32) enthalten, welche drehbeweglich mit der genannten Welle verbunden sind und mit der genannten ersten Membran (25) zusammenwirken, um deren Verformung entsprechend den Zentrifugalkräften in einer Richtung zu bewirken, die sich der genannten Klemmplatte annähert, um allmählich die Klemmung der genannten ersten und zweiten Reibscheibe herbeizuführen und zu verstärken, und daß die Mittel zur Verstellung der Klemmung so angebracht sind, daß die genannte Klemmung in einem anderen Drehzahlbereich allmählich entsprechend der Drehzahlerhöhung der genannten Welle abnimmt.

2. Wärmegenerator nach Anspruch 1, dadurch gekennzeichnet, daß die genannten Verstellmittel eine zweite Membran (26) und eine zweite Gruppe von Einsätzen (43) einschließen, die drehbeweglich mit der genannten Welle verbunden sind und mit der genannten zweiten Membran zusammenwirken und sie entsprechend den Zentrifugalkräften in einer Richtung verformen, die von der genannten Klemmplatte weg tendiert, um die Klemmung der genannten ersten und zweiten Reibscheibe allmählich zu reduzieren.

3. Wärmegenerator nach Anspruch 2, dadurch gekennzeichnet, daß die genannte zweite Membran (26) mit der genannten Klemmplatte zusammenwirkt, daß sie fest mit einer Zwischenplatte (36) verbunden ist, die in axialer Richtung beweglich an der genannten Welle befestigt ist, daß die genannte erste Membran (25) mit der genannten Zwischenplatte zusammenwirkt und daß ein Anschlag (40) fest mit der genannten Welle verbunden ist, um die Verschiebung der genannten Zwischenplatte in Richtung der genannten Klemmplatte zu begrenzen.

4. Wärmegenerator nach Anspruch 3, dadurch gekennzeichnet, daß die genannten Membranen drehbeweglich mit der genannten Welle verbunden sind, daß die Einsätze der ersten vorgenannten Gruppe an der genannten ersten Membran (25) angebracht sind und daß die Einsätze der zweiten vorgenannten Gruppe an der genannten zweiten Membran (26) angebracht sind.

5. Wärmegenerator, insbesondere für ein Kraftfahrzeug, mit einem Raum (13) zur Aufnahme von mechanischen Reibmitteln (20, 22) zur verstellbaren Klemmung, drehbeweglich verbunden mit einer mit einem Motor gekoppelten Welle (16), mit Mitteln (48) zur Verstellung der genannten mechanischen Reibmittel mit der Neigung, die genannte Klemmung entsprechend der Drehzahl der genannten Welle (16) allmählich innerhalb eines festgelegten unteren Drehzahlbereichs zu erhöhen, dadurch gekennzeichnet, daß er erste Reibscheiben (20) enthält, die drehbeweglich mit der genannten Welle (16) fest verbunden, in dem genannten Raum angebracht und entlang der axialen Richtung dieser Welle beweglich sind, zweite Reibscheiben (22), die abwechselnd mit den genannten ersten Scheiben angeordnet und in dem genannten Raum entlang der genannten axialen Richtung beweglich sowie gegen jede Drehbewegung blockiert sind, und eine Klemmplatte (24), die axial verschiebbar angebracht ist, um die erste und die zweite Reibscheibe zu klemmen, und woran die genannten Verstellmittel angreifen, daß die genannten Verstellmittel wenigstens zwei verstellbare Abstandsscheiben (52a, 52b- 53a, 53b- 64a, 64b) enthalten, die in axialer Richtung beweglich an der genannten Welle angebracht und drehbeweglich fest damit verbunden sind, daß Einsätze oder Kugeln (49, 50, 70) so befestigt sind, daß sie entsprechend der Zentrifugalkraft, die von der genannten Welle auf sie einwirkt, zwischen diesen beiden Platten zu liegen kommen, und daß wenigstens eine der Platten mit der Vorderseite mit den genannten Einsätzen oder Kugeln in Berührung steht, um aufgrund der Ausbildung einen verstellbaren Abstand zwischen den beiden Platten festzulegen, wodurch wenigstens teilweise ein Gesetz zur Verstellung der Klemmung der genannten mechanischen Reibmittel definiert wird und wobei dieses Gesetz zu dem Zweck definiert wird, die genannte Klemmung in einem anderen Drehzahlbereich entsprechend der Erhöhung der Drehzahl der genannten Welle allmählich zu verringern.

6. Wärmegenerator nach Anspruch 5, dadurch gekennzeichnet, daß es sich bei einer der verstellbaren Abstandsplatten (53b, 64b) um die vorgenannte Klemmplatte handelt.

7. Wärmegenerator nach Anspruch 5 oder 6, dadurch gekennzeichnet, daß er zwei Paar verstellbare Abstandsplatten (52a, 52b- 53a, 53b) enthält, die jeweils zwei Gruppen von Kugeln (49, 50) umschließen, so daß bei dem ersten Paar (52a, 52b) die den genannten Platten gegenüberliegenden Flächen einen Raum begrenzen, der sich radial nach außen verkleinert, und daß bei einem zweiten Paar (56a, 56b) die den genannten Platten gegenüberliegenden Flächen einen Raum begrenzen, der sich radial nach außen erweitert, zumindest von einem bestimmten radialen Abstand zur Welle an.

8. Wärmegenerator nach Anspruch 7, dadurch gekennzeichnet, daß die Einsätze oder Kugeln der genannten zweiten Gruppe (50) in ihrem Raum zwischen den genannten Platten durch einen Federring (58) oder ein entsprechendes Mittel festgehalten werden.

9. Wärmegenerator nach einem der Ansprüche 7 oder 8, dadurch gekennzeichnet, daß die Platte (52b) des ersten Paars, welches einer Platte (53a) des zweiten Paars am nächsten liegt, so ausgebildet ist, daß sie damit in Kontakt treten kann, um das genannte zweite Paar in einer Richtung zu schieben, wodurch die mechanischen Reibmittel eingeklemmt werden, und daß der Hubweg dieser Platte (52b) des genannten ersten Paars in axialer Richtung durch einen fest mit der genannten Welle verbundenen Anschlag (62) begrenzt ist.

10. Wärmegenerator nach Anspruch 5 oder 6, dadurch gekennzeichnet, daß die beiden verstellbaren Abstandsplatten (64a, 64b) mit den gegenüberliegenden Seiten so ausgebildet sind, daß radial nach außen hin ein erster Raum (69) entsteht, der sich radial nach außen verengt, sowie ein zweiter Raum (70), der sich radial nach außen erweitert, und daß die Kugeln (66) die zwischen diesen einander gegenüberliegenden Flächen angeordnet sind, in dem genannten ersten oder zweiten Raum durch einen Federring (67) oder ein gleichwertiges Mittel festgehalten werden.

11. Wärmegenerator nach einem der Ansprüche 7 bis 10, dadurch gekennzeichnet, daß die Platten des genannten ersten Paars in axialer Richtung durch elastische Mittel (60) in Richtung aufeinander hin beansprucht werden.

12. Wärmegenerator, insbesondere für ein Kraftfahrzeug, mit einem Raum (13) zur Aufnahme von mechanischen Reibmitteln (20, 22) zur verstellbaren Einspannung, durch eine mit einem Motor gekoppelte Welle (16) in Rotation versetzt, mit Mitteln (25, 26, 30, 31, 42) zur Verstellung der Klemmung der genannten mechanischen Reibmittel mit der Tendenz zur allmählichen Verstärkung dieser Klemmung entsprechend der Drehzahl der genannten Welle (16) in einem festgelegten unteren Drehzahlbereich, dadurch gekennzeichnet, daß er erste, drehbeweglich mit der genannten Welle (16) fest verbundene Reibscheiben (20) enthält, die im genannten Raum angebracht und entsprechend der axialen Richtung dieser Welle beweglich sind, zweite Reibscheiben (22), die abwechselnd mit den genannten ersten Scheiben angeordnet und in dem genannten Raum entlang der genannten axialen Richtung beweglich sowie gegen jede Drehbewegung blockiert sind, und eine Klemmplatte (24), die in Längsrichtung verschiebbar angebracht ist, um die erste und zweite Reibscheibe einzuspannen und woran die genannten Verstellmittel angreifen, und daß die genannten Verstellmittel die genannte Klemmplatte (24) enthalten, die wiederum so angebracht ist, daß eine dichte, bewegliche Wand des vorgenannten Raums (13) gebildet wird, worin das Wärmeträgermedium zirkuliert, so daß der von dem Wärmeträgermedium ausgehende Zentrifugaldruck darauf einwirken kann und daß eine Beanspruchung in einer Richtung erfolgt, bei der die genannten mechanischen Reibmittel (20, 22) die Tendenz haben, sich zu lösen (Figur 4).

13. Wärmegenerator nach Anspruch 12, dadurch gekennzeichnet, daß das genannte Wärmeträgermedium durch eine Regelpumpe (18) bewegt wird, welche mechanisch mit dem Motor gekoppelt ist, so daß eine Drehzahlerhöhung zu einer Erhöhung des Druckes in dem genannten Raum führt, der auf die genannte Klemmplatte einwirkt, welche eine dichte bewegliche Wand bildet.

14. Wärmegenerator nach Anspruch 13, dadurch gekennzeichnet, daß es sich bei der genannten Pumpe (18) um eine direkt mit der genannten Welle (16) gekoppelte Zahnradpumpe handelt.

15. Wärmegenerator, insbesondere für ein Kraftfahrzeug, mit einem Raum (113) zur Aufnahme von mechanischen Reibmitteln (120, 122) zur verstellbaren Einspannung, durch eine mit einem Motor gekoppelte Welle (116) in Rotation versetzt, mit Mitteln (125, 132, 143) zur Verstellung der Klemmung der genannten mechanischen Reibmittel mit der Tendenz zur allmählichen Verstärkung dieser Klemmung entsprechend der Drehzahl der genannten Welle (116) in einem festgelegten unteren Drehzahlbereich, dadurch gekennzeichnet, daß er erste, drehbeweglich mit der genannten Welle (116) fest verbundene Reibscheiben (120) enthält, die im genannten Raum angebracht und entsprechend der axialen Richtung beweglich sind, zweite Reibscheiben (122), die abwechselnd mit den genannten ersten Scheiben angeordnet und in dem genannten Raum entlang der genannten axialen Richtung beweglich sowie gegen jede Drehbewegung blockiert sind, und eine Klemmplatte (124), die in Längsrichtung verschiebbar angebracht ist, um die erste und zweite Reibscheibe einzuspannen, dadurch gekennzeichnet, daß die genannten Verstellmittel eine Feder enthalten, die eine ringförmige Membran (125) bildet, eine erste Gruppe von Einsätzen (132), die drehbeweglich mit der genannten Welle verbunden und durch formschlüssige Verbindungen (139, 144) mit der genannten Membran gekoppelt sind, um diese entsprechend den Zentrifugalkräften in einer Richtung zu verformen, die eine Annäherung an die genannte Klemmplatte (124) mit sich bringt, wobei die genannten Mittel zur Verstellung der Klemmung so angeordnet sind, daß sich die genannte Klemmung in einem anderen Drehzahlbereich entsprechend der Drehzahlerhöhung der genannten Welle allmählich vermindert.

16. Wärmegenerator nach Anspruch 15, dadurch gekennzeichnet, daß die Einsätze der genannten ersten Gruppe schwenkbar an einer an der genannten Welle befestigten Stütze (145) angebracht sind, und daß jeder Einsatz (132) einen Hebel (144) aufweist, der in eine Ringnut (139) einer Muffe (138) eingreift, die in Längsrichtung an der genannten Welle (116) gleitet, wobei die genannte Muffe durch eine Membranträgerplatte (134), die lotrecht zur genannten Welle angeordnet ist, verlängert ist.

17. Wärmegenerator nach Anspruch 16, dadurch gekennzeichnet, daß die genannte Membran (134) mit ihrer Innenperipherie auf einem Kranz (146) aufliegt, der verschiebbar an der Außenfläche der genannten Muffe (138) angebracht und mit Längsstützen (147) verbunden ist, die fest mit der genannten Klemmplatte (124) in Verbindung stehen.

18. Wärmegenerator nach einem der Ansprüche 15 bis 17, dadurch gekennzeichnet, daß er eine zweite Gruppe von Einsätzen (143) enthält, die von der genannten Welle in Drehbewegung versetzt werden und mit der genannten Membran (125) zusammenwirken, um diese entsprechend den Zentrifugalkräften in einer Richtung zu verformen, die sich von der genannten Klemmplatte (124) entfernt, um die Klemmkraft zwischen der genannten ersten und zweiten Reibscheibe allmählich zu reduzieren.

19. Wärmegenerator nach Anspruch 22, dadurch gekennzeichnet, daß die Einsätze der genannten zweiten Gruppe auf der Membran (125) aufliegen.

20. Wärmegenerator nach einem der Ansprüche 15 bis 19, dadurch gekennzeichnet, daß zwischen einem fest mit der Klemmplatte verbundenen Teil (150) und einem fest mit der vorgenannten Welle (116) verbundenen Teil (151) ein Dämpfungssystem eingebaut ist, wobei diese beiden Teile einen ringförmigen Hohlraum (155) begrenzen und eine fest mit einem dieser Teile verbundene Wand mit Kanälen (156) geringen Querschnitts versehen ist, die den Hohlraum in zwei Kammern unterteilen.

21. Wärmegenerator nach einem der vorherigen Ansprüche, dadurch gekennzeichnet, daß er Mittel besitzt, um ein Wärmeträgermedium in dem genannten Raum zirkulieren zu lassen.

22. Wärmegenerator nach einem der Ansprüche 1 bis 20, dadurch gekennzeichnet, daß das den genannten Raum (113) begrenzende Gehäuse eine Doppelwand (130a, 130b) einschließt, die einen Raum (133) für die Zirkulation eines Wärmeträgermediums begrenzt.

23. Wärmegenerator nach einem der vorherigen Ansprüche, dadurch gekennzeichnet, daß die genannte Welle (16) mit dem Motor mechanisch durch eine Kupplung gekoppelt ist, z.B. eine elektromagnetische Kupplung, die durch thermisch mit dem genannten Wärmeträgermedium gekoppelte Thermostatsteuerungsmittel überwacht wird.

24. Wärmegenerator nach einem der vorherigen Ansprüche dadurch gekennzeichnet, daß die genannte Welle (16) durch den genannten Motor unter Einschaltung eines Drehzahlreglers zur Begrenzung des Drehzahlbereichs angetrieben wird, z.B, mit Hilfe eines Zentrifugaldrehzahlreglers mit Riemen und Riemenscheibe, der als solcher bekannt ist.

25. Wärmegenerator nach einem der vorherigen Ansprüche, dadurch gekennzeichnet, daß der Motor, der die genannte Welle (16) antreibt, der Motor eines Kraftfahrzeuges ist, auf dem der genannte Wärmegenerator angebracht ist.

**Claims**

1. A heat generator, in particular of the motor driven type for an automotive vehicle, comprising a chamber (13) containing mechanical friction means (20, 22) of the variable grip type which are driven in rotation by means of a shaft (16) coupled to a motor, wherein the heat generator includes modulating means (25, 26, 30, 31, 42) for modulating the grip of the said mechanical friction means, tending to augment the said grip progressively as a function of the velocity of the said shaft (16) in a predetermined range of low speeds, characterised in that it includes first friction discs (20) which are fixed with respect to the said shaft (16) for rotation therewith, and which are mounted in the said chamber and movable in the axial direction of the said shaft, second friction discs (22) disposed alternately with the said first discs and movable in the said chamber in the said axial direction, the second discs being prevented from any rotation, and a clamping plate (24) which is mounted for axial sliding movement so as to urge the first and second friction discs together, and on which the said modulating means act, in that the said modulating means include a first diaphragm (25) and a first group of weights (32), the latter being driven in rotation by the said shaft and cooperating with the said first diaphragm (25) to deform the latter in response to centrifugal forces in a direction tending to move it towards the said clamping plate, so as to set up, and progressively to increase, the gripping action of the said first and second friction discs, and in that the means for modulating the grip are arranged so as to reduce the said grip progressively in another range of speeds, in accordance with the increase in the velocity of the said shaft.

2. A heat generator according to Claim 1, characterised in that the said modulating means include a second diaphragm (26) and a second group of weights (43) which are driven in rotation by the said shaft and which cooperate with the said second diaphragm so as to deform the latter in response to centrifugal forces in a direction tending to move it away from the said clamping plate, whereby to reduce progressively the grip between the said first and second friction discs.

3. A heat generator according to Claim 2, characterised in that the said second diaphragm (26) cooperates with the said clamping plate, in that it is fixed with respect to an intermediate plate (36) which is mounted for axial movement on the said shaft, in that the said first diaphragm (25) cooperates with the said intermediate plate, and in that a stop element (40) is fixed with respect to the said shaft whereby to limit the displacement of the said intermediate plate towards the said clamping plate.

4. A heat generator according to Claim 3, characterised in that the said diaphragms are driven in rotation by the said shaft, in that the weights of the first said group are mounted on the said first diaphragm (25), and in that the weights of the said second group are mounted on the said second diaphragm (26).

5. A heat generator, in particular of the motor driven type for an automotive vehicle, comprising a chamber (13) containing mechanical friction means (20, 22) of the variable grip type which are driven in rotation by means of a shaft (16) coupled to a motor, wherein the heat generator includes modulating means (48) for modulating the grip of the said mechanical friction means, tending to augment the said grip progressively as a function of the velocity of the said shaft (16) in a predetermined range of low speeds, characterised in that it includes first friction discs (20) which are fixed with respect to the said shaft (16) for rotation therewith, and which are mounted in the said chamber and movable in the axial direction of the said shaft, second friction discs (22) disposed alternately with the said first discs and movable in the said chamber in the said axial direction, the second discs being prevented from any rotation, and a clamping plate (24) which is mounted for axial sliding movement so as to urge the first and second friction discs together, and on which the said modulating means act, in that the said modulating means include at least two variable spacing plates (52a, 52b- 53a, 53b- 64a, 64b), which are mounted for axial movement on the said shaft and which are fixed with respect to the latter for rotation therewith, in that weights or balls (49, 50, 70) are constrained so as to be positioned between the two said plates in response to centrifugal force which is communicated to them by the said shaft, and in that at least one of the plates has its face in contact with the said weights or balls so shaped as to define a variable spacing between the two plates, defining at least partly a modulation characteristic for the grip exerted by the said mechanical friction means, the said characteristic being so defined as to reduce the said grip progressively in another range of speeds, in accordance with the increase in the velocity of the said shaft.

6. A heat generator according to Claim 5, characterised in that one of the variable spacing plates (53b, 64b) is the said clamping plate.

7. A heat generator according to Claim 5 or Claim 6, characterised in that it includes two pairs of variable spacing plates (52a, 52b- 53a, 53b) enclosing respectively two groups of balls (49, 50), whereof a first pair (52a, 52b), in which the surfaces which lie facing the said plates define a space that diminishes in width in the radially outward direction, and a second pair (56a, 56b) in which the surfaces which lie facing towards the said plates define a space that increases in width in the radially outward direction at least beyond a certain radial distance from the shaft.

8. A heat generator according to Claim 7, characterised in that the weights or balls of the said second group (50) are maintained in their space between the said plates by means of a resilient ring (58) or similar means.

9. A heat generator according to Claim 7 or Claim 8, characterised in that the plate (52b) of the first pair closest to a plate (53a) of the second pair is so shaped as to enter into contact with it so as to push the said second pair in a direction such as to tend to clamp the mechanical friction means together, and in that the travel of the said plate (52b) of the said first pair is limited axially by a stop element (62) which is fixed with respect to the said shaft.

10. A heat generator according to Claim 5 or Claim 6, characterised in that the two variable spacing plates (64a, 64b) have their surfaces which face each other so shaped as to define, in the radially outward direction, a first space (69) which diminishes in width in the radially outward direction, then a second space (70) which increases in width in the radially outward direction. and in that the balls (66) which are situated between the said facing surfaces are maintained in the said first or second space by means of a resilient ring (67) or similar means.

11. A heat generator according to one of Claims 7 to 10, characterised in that the plates of the said first pair are urged axially towards each other by resilient means (60).

12. A heat generator, in particular of the motor driven type for an automotive vehicle, comprising a chamber (13) containing mechanical friction means (20, 22) of the variable grip type which are driven in rotation by means of a shaft (16) coupled to a motor, wherein the heat generator includes modulating means (25, 26, 30, 31, 42) for modulating the grip of the said mechanical friction means, tending to augment the said grip progressively as a function of the velocity of the said shaft (16) in a predetermined range of low speeds, characterised in that it includes first friction discs (20) which are fixed with respect to the said shaft (16) for rotation therewith, and which are mounted in the said chamber and movable in the axial direction of the said shaft, second friction discs (22) disposed alternately with the said first discs and movable in the said chamber in the said axial direction, the second discs being prevented from any rotation, and a clamping plate (24) which is mounted for axial sliding movement so as to urge the first and second friction discs together, and on which the said modulating means act, and in that the said modulating means include the said clamping plate (24) itself, which is mounted so as to constitute a movable, sealed wall of the said chamber (13), in which the heat transfer fluid circulates, in such a way as to be subjected to the centrifugal pressure that is generated by the heat transfer fluid itself, and in such a way as to be urged in a direction such as to tend to loosen the grip of the said mechanical friction means (20, 22) (Figure 4).

13. A heat generator according to Claim 12, characterised in that the said heat transfer fluid is driven by a variable output pump (18) mechanically coupled to the motor, in such a way that an increase in the speed of the latter causes the pressure in the said chamber to increase, with this pressure acting on the said clamping plate that constitutes the movable, sealed wall.

14. A heat generator according to Claim 13, characterised in that the said pump (18) is a gear pump directly coupled to the said shaft (16).

15. A heat generator, in particular of the motor driven type for an automotive vehicle, comprising a chamber (113) containing mechanical friction means (120, 122) of the variable grip type which are driven in rotation by means of a shaft (116) coupled to a motor, wherein the heat generator includes modulating means (125, 132, 143) for modulating the grip of the said mechanical friction means, tending to augment the said grip progressively as a function of the velocity of the said shaft (116) in a predetermined range of low speeds, characterised in that it includes first friction discs (120) which are fixed with respect to the said shaft (116) for rotation therewith and which are mounted in the said chamber and movable in the axial direction of the said shaft, second friction discs (122) disposed alternately with the said first discs and movable in the said chamber in the said axial direction, the second discs being prevented from any rotation, and a clamping plate (124) which is mounted for axial sliding movement so as to urge the first and second friction discs together, and on which the said modulating means act, characterised in that the said modulating means include a spring in the form of an annular diaphragm (125), a first group of weights (132) connected with the said shaft for rotation therewith and coupled to the said diaphragm by means of profiled link elements (139, 144), whereby to deform it, in response to centrifugal forces, in a direction such as to tend to cause it to move towards the said clamping plate (124), the said means for modulating the grip being arranged so as to reduce the said grip progressively in another range of speeds, in response to the increase in the velocity of the said shaft.

16. A heat generator according to Claim 15, characterised in that the weights of the said first group are mounted pivotally on a support (145) fixed to the said shaft, and in that each weight (132) includes a lever (144) engaged in an annular groove (139) of a sleeve (138) which slides longitudinally on the said shaft (116), the said sleeve being extended in length by a diaphragm carrier plate (134), which is perpendicular to the said sleeve.

17. A heat generator according to Claim 16, characterised in that the said diaphragm (125) is in engagement by means of its inner periphery against a thrust ring (146) which is mounted for sliding movement on the outer surface of the said sleeve (138) and which is connected to longitudinal supports (147) fixed with respect to the said clamping plate (124).

18. A heat generator according to one of Claims 15 to 17, characterised in that it includes a second group of weights (143) which are driven in rotation by the said shaft and which cooperate with the said diaphragm (125) so as to deform it in response to centrifugal forces in a direction such as to tend to move further away from the said clamping plate (124), whereby to reduce the gripping force between the said first and second friction discs progressively.

19. A heat generator according to Claim 22, characterised in that the weights of the said second group are carried by the diaphragm (125).

20. A heat generator according to one of Claims 15 to 19, characterised in that a damping system is arranged between a member (150) which is fixed with respect to the gripping plate and a member (151) which is fixed with respect to the said shaft (116), the two said members defining an annular cavity (155), the cavity being divided into two chambers by a wall which is fixed with respect to one of the said members and which is pierced with ducts (156) of small cross section.

21. A heat generator according to one of the preceding Claims, characterised in that it includes means for causing a heat transfer fluid to circulate in the said chamber.

22. A heat generator according to one of Claims 1 to 20, characterised in that the housing defining the said chamber (113) includes a double wall (130a, 130b) defining a space (133) for circulation of a heat transfer fluid therein.

23. A heat generator according to one of the preceding Claims, characterised in that the said shaft (16) is mechanically coupled to the motor through a clutch, for example an electromagnetic clutch controlled by thermostatic control means thermally coupled to the said heat transfer fluid.

24. A heat generator according to one of the preceding Claims, characterised in that the said shaft (16) is driven by the said motor through a speed changer for limiting the range of speeds, for example a centrifugal speed changer of the belt and pulley type known per se.

25. A heat generator according to one of the preceding Claims, characterised in that the motor which drives the said shaft (16) is the engine of an automotive vehicle on which the said heat generator is mounted.

# FIG.1

## FIG.2

## FIG.3

# FIG.4

# FIG.5